# EUROPEAN PATENT APPLICATION

(11) **EP 4 636 692 A1**
(43) Date of publication of application: **22.10.2025**
(21) Application number: 25162897.0
(22) Date of filing: 11.03.2025
(51) Int. Cl.: G06T 7/292, G06T 7/246

(54) **METHOD, DEVICE, AND STORAGE MEDIUM FOR TARGET TRACKING**

(30) Priority: 15.04.2024 CN 202410451238
(71) Applicant: FUJITSU LIMITED, Kawasaki-shi, Kanagawa 211-8588 (JP)
(72) Inventor: Wang, Mengjiao, Beijing, 100027 (CN); Liu, Rujie, Beijing, 100027 (CN)
(74) Representative: Hoffmann Eitle

(57) **Abstract**

The present disclosure relates to a method, device and storage medium for target tracking. According to an embodiment, the method comprises: determining a plurality of local target trajectories having local target identifications based on a plurality of current frames at a current timing provided by a plurality of cameras; updating a first feature bank including a sub-tracklet feature of a recent sub-tracklet of each local target trajectory and a second feature bank including a sub-tracklet feature of an early sub-tracklet of each local target trajectory based on the plurality of local target trajectories; and performing, in a case where the current timing satisfies a time requirement for a predetermined clustering period, operations of: determining a plurality of current anchors having corresponding current cluster appearance features by clustering features in the union of the updated first feature bank and the updated second feature bank; and determining a global target identification of a detected target in the plurality of current frames based on the plurality of current anchors.

## Description

### CROSS-REFERENCE TO RELATED APPLICATIONS

This application claims the priority benefit of Chinese Patent Application No. 202410451238.X, filed on April 15, 2024 in the China National Intellectual Property Administration, the disclosure of which is incorporated herein in its entirety by reference.

### FIELD OF THE INVENTION

The present disclosure relates generally to image processing, and more particularly, to a method for target tracking, a device for target tracking, and a computer-readable non-transitory storage medium storing a program.

### BACKGROUND OF THE INVENTION

With the development of computer science, it is becoming increasingly universal and effective to use computers to run image processing programs in order to obtain useful information. Multi-target tracking is an important application field of image processing.

Multi-object tracking is commonly referred to as MTT (Multiple Target Tracking; sometimes also abbreviated as MOT: Multiple Object Tracking) briefly, which is used to detect and endow identifications (IDs) to objects of multiple types of interest such as pedestrians, automobiles and/or animals in a video, so as to determine trajectories thereof and implement tracking. A desired tracking result is that: after multi-object tracking is performed, different objects are endowed with different IDs, so as to implement tasks such as accurate tracking, accurate searching and the like. MOT is a key technique in the field of computer vision, and has been widely applied in aspects such as autonomous driving, intelligent monitoring, behavior recognition and the like.

Multi-object tracking includes single-camera tracking and cross-camera tracking. Input videos for a tracker used for single-camera tracking (e.g., an application program that implements tracking) come from only one camera.

Input videos for cross-camera tracking come from multiple cameras. To make the same target be identified as the same identification in all images from multiple cameras, it is necessary to perform association for local tracking trajectories output in individual single-camera tracking. For example, if it is determined through related processing that corresponding targets of a local trajectory L-Trl under a first camera and a local trajectory L-Tr2 under a second camera are the same person, target identifications of the trajectories L-Trl and L-Tr2 are each marked as a unique global identification "IDXXXX", that is, the trajectories L-Trl and L-Tr2 are associated together as a global trajectory GTr of a target "IDXXXX". The global trajectory GTr can be a trajectory where multiple local trajectories are connected together with regard to time. A trajectory output in target tracking includes multiple trajectory points corresponding to multiple image acquisition timings.

Literature 1: Huang, Hsiang-Wei, et al. "Enhancing Multi-Camera People Tracking with Anchor-Guided Clustering and Spatio-Temporal Consistency ID Re-Assignment", Proceedings of the IEEE/CVF Conference on Computer Vision and Pattern Recognition, 2023.

Literature 1 provides an anchor-based cross-camera multi-target tracking method, which mainly consists of steps of: (1) using appearance features in down-sampled frames to generate anchors (with global IDs) across cameras via hierarchical clustering; (2) computing a cost matrix between anchors and features from each frame across different cameras, and using Hungarian algorithm to assign different global IDs to single camera trajectories; (3) performing majority voting with a sliding window to further refine final trajectories.

In the field of cross-camera multi--target tracking, there is a need to implement online tracking (i.e., real-time tracking). The method as described in Literature 1 is not applicable to online tracking. Compared with the case of non-online tracking (a complete video within a predetermined time period has been acquired; for example, Literature 1), online tracking requires to, in the case of limited data (with only images at a current timing and trajectory information within a previous time period), ensure tracking accuracy, and ensure a faster processing speed so as to implement real-time tracking.

### SUMMARY OF THE INVENTION

A brief summary of the present disclosure is given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

Having conducted study and experiments on cross-camera multi-target online tracking, the inventor proposed solutions of the present disclosure, for a desire of providing a cross-camera multi-target online tracking technique, with a better effect in terms of accuracy.

According to an aspect of the present disclosure, there is provided a method for target tracking. The method comprises: determining a plurality of local target trajectories having local target identifications based on a plurality of current frames at a current timing provided by a plurality of cameras; updating a first feature bank including a sub-tracklet feature of a recent sub-tracklet of each local target trajectory and a second feature bank including a sub-tracklet feature of an early sub-tracklet of each local target trajectory based on the plurality of local target trajectories; and performing, in a case where the current timing satisfies a time requirement for a predetermined clustering period, operations of: determining a plurality of current anchors having corresponding current cluster appearance features by clustering features in the union of the updated first feature bank and the updated second feature bank; and determining a global target identification of a detected target in the plurality of current frames based on the plurality of current anchors.

According to an aspect of the present disclosure, there is provided a device for target tracking. The device comprises: a memory having instructions stored thereon; and at least one processor coupled to the memory and configured to execute the instructions to implement the foregoing method for target tracking.

According to another aspect of the present disclosure, there is provided a computer-readable non-transitory storage medium storing a program. The program, when executed by a computer, causes the computer to perform operations of: determining a plurality of local target trajectories having local target identifications based on a plurality of current frames at a current timing provided by a plurality of cameras; updating a first feature bank including a sub-tracklet feature of a recent sub-tracklet of each local target trajectory and a second feature bank including a sub-tracklet feature of an early sub-tracklet of each local target trajectory based on the plurality of local target trajectories; and performing, in a case where the current timing satisfies a time requirement for a predetermined clustering period, operations of: determining a plurality of current anchors having corresponding current cluster appearance features by clustering features in the union of the updated first feature bank and the updated second feature bank; and determining a global target identification of a detected target in the plurality of current frames based on the plurality of current anchors.

The beneficial effects of the methods, devices and storage media of the present disclosure include at least one of the following effects: implementing real-time online target tracking, and achieving better target tracking accuracy.

### BRIEF DESCRIPTION OF THE DRAWINGS

Embodiments of the present disclosure will be described below with reference to the accompanying drawings, which will help to more easily understand the above and other objects, features and advantages of the present disclosure. The accompanying drawings are merely intended to illustrate the principles of the present disclosure. The sizes and relative positions of units are not necessarily drawn to scale in the accompanying drawings. The same reference numbers may denote the same features. In the accompanying drawings:
Figure 1 illustrates an exemplary flowchart of a method for target tracking according to an embodiment of the present disclosure;
Figure 2 illustrates a schematic view of a plurality of trajectories according to an embodiment of the present disclosure;
Figure 3 illustrates an exemplary flowchart of a method for target tracking according to an embodiment of the present disclosure;
Figure 4 illustrates an exemplary block diagram of a device for target tracking according to an embodiment of the present disclosure;
Figure 5 illustrates an exemplary block diagram of an information processing apparatus according to an embodiment of the present disclosure; and
Figure 6 illustrates an exemplary block diagram of a device for target tracking according to an embodiment of the present disclosure.

### DETAILED DESCRIPTION OF THE INVENTION

Hereinafter, exemplary embodiments of the present disclosure will be described combined with the accompanying drawings. For the sake of clarity and conciseness, the specification does not describe all features of actual embodiments. However, it should be understood that many decisions specific to the embodiments may be made in developing any such actual embodiment, so as to achieve specific objects of a developer, and these decisions may vary as embodiments are different.

It should also be noted herein that, to avoid the present disclosure from being obscured due to unnecessary details, only those device structures closely related to the solution according to the present disclosure are shown in the accompanying drawings, while other details not closely related to the present disclosure are omitted.

It should be understood that, the present disclosure will not be limited only to the described embodiments due to the following description with reference to the accompanying drawings. Herein, where feasible, embodiments may be combined with each other, features may be substituted or borrowed between different embodiments, and one or more features may be omitted in one embodiment.

Computer program code for performing operations of various aspects of embodiments of the present disclosure can be written in any combination of one or more programming languages, the programming languages including object-oriented programming languages, such as Java, Smalltalk, C++ and the like, and further including conventional procedural programming languages, such as "C" programming language or similar programming languages.

Methods of the present disclosure can be implemented by circuitry having corresponding functional configurations. The circuitry includes circuitry for a processor.

An aspect of the present disclosure relates to a method for target tracking. The inventor developed a target tracking method by adopting the concept of anchors. The method is applicable particularly to online cross-camera multi-target tracking. The method may be implemented through a computer. The method comprises a local trajectory determining operation, a feature bank updating operation, a clustering operation, and a global target identification determining operation, wherein the clustering operation is performed at a predetermined clustering period T (that is, the clustering operation is performed once every time T; for example, the clustering operation is performed once every 5 seconds), so as to determine a plurality of anchors used for assigning global identifications of trajectories. The method of the present disclosure is applicable to fields such as autonomous driving, intelligent monitoring, behavior recognition and the like.

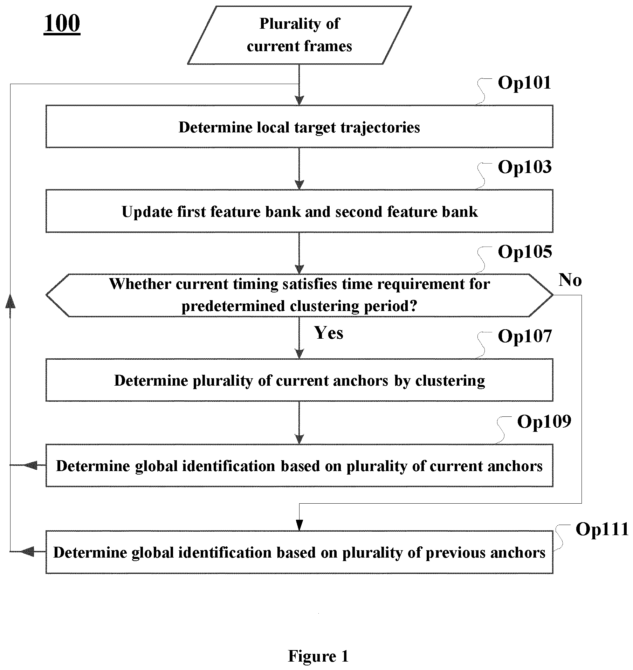

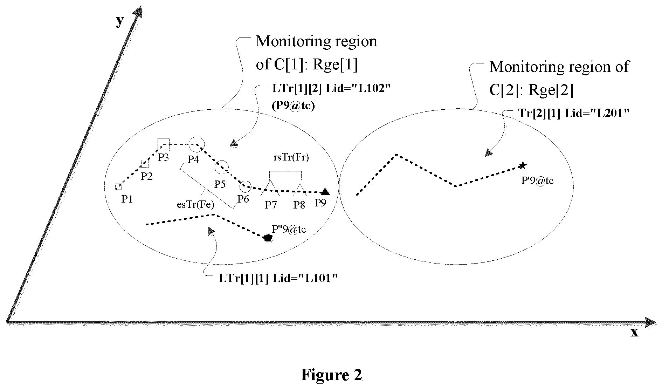

Figure 1 illustrates an exemplary flowchart of a method 100 for target tracking according to an embodiment of the present disclosure. The method 100 includes performing a clustering operation at a predetermined clustering period T, so as to determine a plurality of anchors used for assigning global identifications of trajectories. A specific implementation manner is as illustrated in Figure 1. Figure 2 illustrates a schematic view of a plurality of trajectories used for understanding the method 100.

In operation Op101 (also referred to as a "local trajectory determining operation"), a plurality of local target trajectories having local target identifications is determined based on a plurality of current frames at a current timing tc provided by a plurality of cameras. A camera among the plurality of cameras may be represented as C[n], n ∈ [1,N], where N is a natural number representing the number of the cameras. A frame provided by the camera C[n] among the plurality of current frames may be represented as f[n][i], where i is a frame serial number corresponding to an acquisition timing of the frame. For example, a current frame provided by the camera C[n] can be represented as f[n][itc]. "Lid" in Figure 2 represents a local identification.

Figure 2 schematically illustrates 3 local trajectories LTr[1][1], LTr[1][2], LTr[2][1] obtained when N=2, wherein, trajectory points P1 to P9 on the local trajectory LTr[1][2] are schematically illustrated, where P9 corresponds to a trajectory point of a target "L102" at a current timing. It should be noted that, if a target Tgx travels from a region Rge[1] to Rge[2], trajectories Trl and Tr2 are respectively formed in Rge [1] and Rge [2] in this process. Trl and Tr2 in a local target trajectory set have different local target identifications.

A local target trajectory can be determined with a single-camera multi-target tracking model. A basic determining method may be: detecting a position of a target of a type of interest in a current frame f[n][itc]; associating the target at the position with one of previously determined trajectories (i.e., local target identifications) or initializing that target into a start trajectory point of a local trajectory of a new local target. The position of the target may be represented by a bounding box that surrounds the target. Exemplarily, related parameters of the bounding box include: a width h, a height w, coordinates (x, y) of a midpoint of a bottom edge, detection confidence c, an appearance feature F of the target, and frame acquisition time t. Bounding boxes are in one-to-one correspondence to trajectory points. Accordingly, each trajectory point has a corresponding appearance feature. It can be understood that, according to the coordinates, coordinates of the target in the world coordinate system can be obtained. A local target identification of each detected target bounding box in the current frame can be determined based on a method such as position prediction and the like, thereby associating a trajectory point corresponding to each bounding box with a previous local target trajectory which has been determined or generating a new local trajectory which has been assigned with a new local target identification. That is, operation Op101 will determine a local target identification of each detected target bounding box in the current frame, so that trajectory points corresponding to these bounding boxes may be added onto corresponding local trajectories according to the local target identifications of these bounding boxes to obtain updated local trajectories. As can be seen, operation Op101 may be seen as an operation of updating a local trajectory set of each camera. A local trajectory point P can be described by a multivariate number: (h, w, x, y, c, F, t, Lid). After a global identification Gid of the trajectory point is determined, the global trajectory point can be described as a multivariate number: (h, w, x, y, c, F, t, Gid). An objective of the method 100 is to determine a global target identification Gid of each local trajectory point, thereby implementing cross-camera multi-target tracking. Single-camera multi-target tracking that generates local target trajectories is a conventional technique, and will no longer be described here.

In operation Op103 (also referred to as a "feature bank updating operation"), a first feature bank B1 and a second feature bank B2 are updated based on the plurality of local target trajectories. The first feature bank B1 includes a sub-tracklet feature Fr of a recent sub-tracklet rsTr (e.g. a sub-tracklet constituted by P7 to P8) of each local target trajectory (e.g., LTr[1][2]). The second feature bank B2 includes a sub-tracklet feature Fe of an early sub-tracklet esTr (e.g. a sub-tracklet constituted by P4 to P6) of each local target trajectory. A sub-tracklet feature may be a representative feature of a sub-tracklet. The representative feature may be an average feature of an appearance feature of each trajectory point on the sub-tracklet, e.g., a weighted average feature based on detection confidence, or a feature determined by calculating the arithmetic average of appearance features of a plurality of trajectory points. That is, both the first feature bank and the second feature bank are sets of appearance features. The first feature bank includes appearance features related to the recent sub-tracklet, and is also referred to as a "new appearance feature bank". The second feature bank includes appearance features related to the early sub-tracklet, and is also referred to as a "prototype feature bank".

In operation Op105 (also referred to as a "determining operation"), it is determined whether the current timing tc satisfies a time requirement for a predetermined clustering period T (e.g., 3 seconds, 5 seconds or more). If a determination result is "Yes", a clustering operation as shown by operation Op107 is performed. For example, when tc-tcu≥T, a determination result is "Yes", where tcu is a timing of performing the clustering operation last time. Alternatively, when |tc-tcu-T|≥ δ , a determination result is "Yes", where δ is a positive constant close to zero. An example time requirement is: a time interval between the current timing and a timing of clustering the features in the union of the first feature bank and the second feature bank last time to determine a plurality of previous anchors having corresponding previous cluster appearance features is greater than or equal to the predetermined clustering period T. In performing real-time multi-target tracking, a tracking result is required to be given in real time or approximately in real time, and thus a faster processing speed is required. The clustering operation is time-consuming. If a frequency at which the clustering operation is performed is too high, it would be impossible to ensure real-time tracking. Therefore, a clustering period has been set to perform the clustering operation once every certain time, but not to perform the clustering operation each time a frame of image is received. The period T can be set according to at least one of following factors: the hardware processing capacity of apparatus, the number of cameras, a degree of density of targets in a monitoring region, and a tracking accuracy requirement. An exemplary clustering method is "hierarchical clustering".

In operation Op107 (also referred to as a "clustering operation"), a plurality of current anchors having corresponding current cluster appearance features is determined by clustering features in the union of the updated first feature bank B1 and the updated second feature bank B2. Each current anchor A corresponds to one cluster. A current cluster appearance feature cF[j] of a current anchor A[j] may be a representative appearance feature of a cluster CL[j], for example, an appearance feature corresponding to a cluster center of the cluster CL[j], or an appearance feature closest to the cluster center in the cluster CL[j]. It should be noted that, in the field of target tracking, it is a conventional operation to cluster appearance features.

In operation Op109 (one case of a "global target identification determining operation"), a global target identification of a detected target in the plurality of current frames is determined based on the determined plurality of current anchors. In an example, the operation comprises: configuring the plurality of current anchors as a global anchor set (i.e., implementing global ID mapping between the previous anchors and the current anchors), by assigning corresponding global target identifications to the plurality of current anchors based on corresponding relationships between the plurality of current anchors and the plurality of previous anchors; and determining the global target identification of the detected target in the plurality of current frames based on the global anchor set. In an example, the corresponding relationships between the plurality of current anchors and the plurality of previous anchors are determined using Hungarian algorithm. In an example, the corresponding relationships between the plurality of current anchors and the plurality of previous anchors are determined based on cosine distances between pairs of cluster appearance features of the plurality of current anchors and the plurality of previous anchors. In another example, the corresponding relationships between the plurality of current anchors and the plurality of previous anchors are determined based on degrees of overlap between a set (S) of a plurality of features from the updated second feature bank which correspond to the plurality of current anchors and a set (S') of a plurality of features from the second bank before updating which correspond to the plurality of previous anchors. For example, a pair of anchors corresponding to two sets with a largest degree of overlap is selected as a corresponding pair of anchors, and a global target identification of a current anchor therein is set as a global identification of a previous anchor. In still another example, for a first anchor among the plurality of current anchors and a second anchor among the plurality of previous anchors, if following two conditions are satisfied, it is determined that the first anchor corresponds to the second anchor: First condition, a cosine distance between a pair of cluster appearance features of the first anchor and the second anchor is less than or equal to a cosine distance threshold; Second condition, a degree of overlap between a set of a plurality of features from the updated second feature bank which corresponds to the first anchor and a set of a plurality of features from the second feature bank before updating which corresponds to the second anchor is greater than or equal to a degree threshold of overlap.

If the determination result in operation Op105 is "No", operation Op111 (another case of the "global target identification determining operation") is performed: a global target identification of a detected target in the plurality of current frames is determined based on the plurality of previous anchors. In an example, it is determined, based on a comparison between appearance features of anchors and an appearance feature of a detected target, to which anchor (i.e., to which global identification) in an anchor set the detected target corresponds.

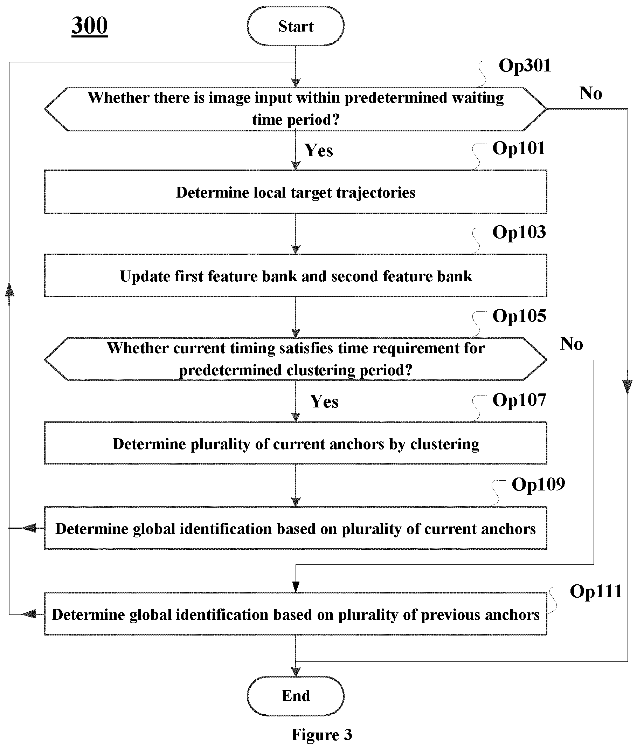

The method for target tracking of the present disclosure may include a step of judging whether to end target tracking. Figure 3 illustrates an exemplary flowchart of a method 300 for target tracking according to an embodiment of the present disclosure. As shown in Figure 3, in addition to the same operations Op101 to Op111 as the method 100, the method 300 further includes operation Op301: determining whether there is an image input within a predetermined waiting time period. If there is an image input, operation Op101 is performed using an input image as a current frame. If there is no image input, the method 300 ends. It is easy to understand based on the process in Figure 3 that the method 300 performs at a predetermined period an operation of updating an anchor set used for determining a global target identification, wherein a global target identification of the anchor set before updating is inherited by the anchor set after updating, so as to implement global association of different local trajectories and implement cross-camera target tracking.

In an embodiment, a recent sub-tracklet and an early sub-tracklet of a local target trajectory are determined based on a trajectory point with occurrence of a mutation in an appearance feature. Specifically, a start trajectory point of the recent sub-tracklet is a trajectory point with occurrence of a mutation in its appearance feature relative to the early sub-tracklet. For example, in Figure 2, there has been occurrence of a mutation in the appearance feature F7 of the start trajectory point P7 of the recent sub-tracklet rsTr relative to the early sub-tracklet esTr. Specifically, a difference between the appearance feature F7 and the sub-tracklet feature Fe of the early sub-tracklet esTr is greater than a predetermined degree. For example, a cosine distance between F7 and Fe is greater than a predetermined degree, or a Euclidean distance between F7 and Fe is greater than a predetermined degree. An example of occurrence of a mutation in an appearance feature is: the target Tgx travels facing the camera C[1] at an early stage, and a corresponding process corresponds to the early sub-tracklet esTr; the target Tgx suddenly turns its back to the camera C[1] at a timing corresponding to point P7, and the camera C[1] captures a back image of the target Tgx for the first time, there has been occurrence of a mutation in an appearance feature F7 (i.e., an appearance feature corresponding to a back side image) of the target Tgx at the timing corresponding to point P7 relative to an appearance feature corresponding to a front image of Tgx, and thus P7 is a trajectory point with occurrence of a mutation in an appearance feature; the target Tgx continues to travel facing away from the camera C[1], a corresponding process corresponds to the recent sub-tracklet rsTr, and a start point of the recent sub-tracklet rsTr is P7.

In an embodiment, an average feature of features of trajectory points of a sub-tracklet is used as a sub-tracklet feature. Accordingly, in updating the first and second feature banks, for each local target trajectory (e.g., LTr[1][2] in Figure 2) among the plurality of local target trajectories, the sub-tracklet feature Fr of the recent sub-tracklet is an average feature of appearance features of the local target trajectory from a recent mutation trajectory point (P7) to a preceding trajectory point (P8) of a current trajectory point (P9); and the sub-tracklet feature Fe of the early sub-tracklet (esTr) is an average feature of appearance features of the local target trajectory from an early mutation trajectory point (P4) to a preceding trajectory point (P6) of the recent mutation trajectory point (P7).

**Table 1 Changes before and after Updating when Difference is Greater than Predetermined Degree**

| | esTr | Fe | rsTr | Fr | B1 | B2 |
|---|---|---|---|---|---|---|
| Before Updating | P4to P6 | Fe0 | P7to P8 | Fr0 | B10 ∪ {Fr0} | B20 |
| After Updating | P7to P8 | Fr0 | P9 | F9 | B10 ∪ {F9} | B20 ∪ {Fr0} |

**Table 2 Changes before and after Updating when Difference is not Greater than Predetermined Degree**

| | esTr | Fe | rsTr | Fr | B1 | B2 |
|---|---|---|---|---|---|---|
| Before Updating | P4to P6 | Fe0 | P7to P8 | Fr0 | B10 ∪ {Fr0} | B20 |
| After Updating | P4to P6 | Fe0 | P7to P9 | Fr1 | B10 ∪ {Fr1} | B20 |

For the operation of updating the feature banks, exemplary updating for a local target trajectory has been shown in Tables 1 and 2, wherein the local target trajectory is LTr[1][2] in Figure 2, Table 1 shows a case where a difference exceeds a threshold, and Table 2 shows a case where a difference does not exceed a threshold. In an embodiment, updating the first feature bank and the second feature bank based on the plurality of local target trajectories comprises: for a local target trajectory LTr, if a difference between an appearance feature Fc (corresponding to F9 in Table 1) of its current trajectory point Pc (corresponding to P9 in Table 1 and Figure 2) and a sub-tracklet feature Fr0 of a recent sub-tracklet rsTr is greater than a predetermined degree, the sub-tracklet feature Fr0 of the recent sub-tracklet rsTr is added to the second feature bank B2, Fr0 is removed from the first feature bank B1 and the appearance feature Fc of the current trajectory point is added to B1, the recent sub-tracklet rsTr of the trajectory LTr is updated to a tracklet including the current trajectory point, and the early sub-tracklet esTr of the trajectory LTr is updated to a previous recent sub-tracklet (e.g., a tracklet defined by P7 to P8 in Table 1 and Figure 2); if a difference between an appearance feature Fc of its current trajectory point Pc and a sub-tracklet feature Fr of a recent sub-tracklet rsTr is not greater than a predetermined degree, the recent sub-tracklet rsTr of the trajectory LTr is updated to a tracklet (e.g., a tracklet defined by P7 to P9 in Table 2 and Figure 2) having been added with the current trajectory point Pc, and the sub-tracklet feature of the recent sub-tracklet rsTr in the first feature bank B1 is updated to a tracklet feature of the updated recent sub-tracklet (for example, as shown in Table 2, the appearance feature Fr0 in B1 is updated to Fr1). The sub-tracklet feature may exemplarily be a feature average (i.e., an average feature) of features of trajectory points on a respective sub-tracklet.

If the second feature bank B2 contains too many features, the clustering operation will be made to consume too much time, which is not conducive to the implementation of real-time online tracking. In an embodiment, in a case where the number of the sub-tracklet features in the second feature bank B2 is greater than a feature number threshold Thn, merging is performed on a pair of features with a feature similarity greater than or equal to a feature similarity threshold in the second feature bank B2 after the features in the union of the first feature bank B1 and the second feature bank B2 are clustered. For example, two features are merged into a weighted average feature or an arithmetic average feature.

The method for target tracking according to the present disclosure is required to use the first feature bank and the second feature bank when determining a global target identification. At an initial stage of implementing the method, the number of the features in the first feature bank and the second feature bank is less, which will reduce the reliability and accuracy of target tracking. Therefore, a preparing stage can be set for the method of the present disclosure. In an embodiment, the target tracking method comprises a preparing stage. A length of a time period corresponding to the preparing stage is greater than or equal to twice the predetermined clustering period T (e.g., 3T, 4T, 5T or 6T), and during the preparing stage, the operation of updating the first feature bank B1 and the second feature bank B2 is performed, while the operation of clustering the features in the union of the updated first feature bank and the updated second feature bank is not performed (even if the current timing satisfies the time requirement for the predetermined clustering period). The length of the time period corresponding to the preparing stage may be determined through experiments or experience.

The method for target tracking according to the present disclosure will use a clustering threshold when performing clustering. Both the clustering threshold and the number of the features in the feature banks will affect the performance of the method. To improve the performance of the method, the clustering threshold may be appropriately adjusted as the method is performed (the number of times for which the clustering operation is performed increases). In an embodiment, as the number of the features in the union of the first feature bank and the second feature bank increases, a clustering threshold used for clustering is gradually increased from a base threshold to a predetermined upper limit threshold greater than the base threshold.

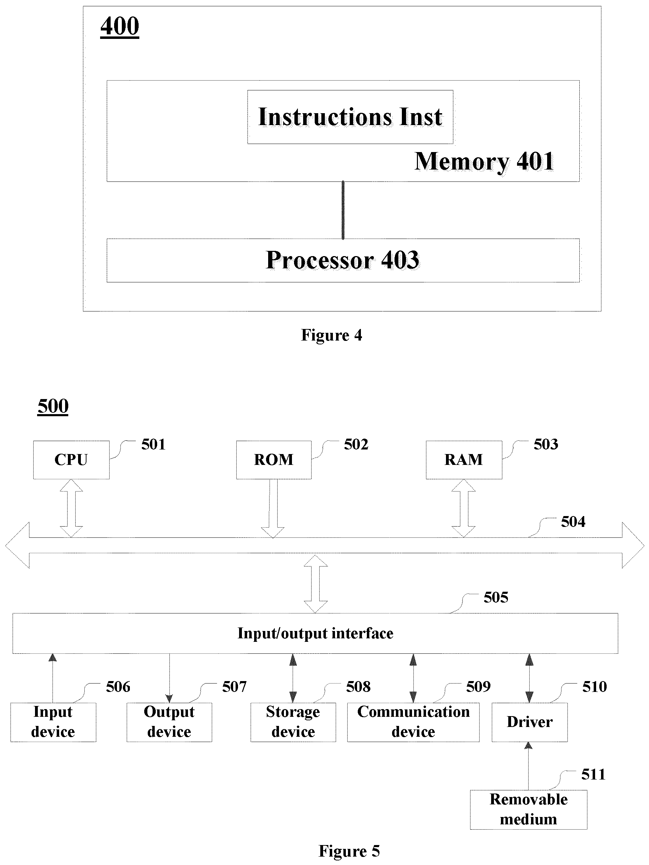

According to an aspect of the present disclosure, there is provided a device for target tracking. Figure 4 illustrates an exemplary block diagram of a device 400 for target tracking according to an embodiment of the present disclosure.

The device 400 comprises: a memory 401 having instructions Inst stored thereon; and at least one processor 403 coupled to the memory and configured to execute the instructions Inst to implement the method (e.g., the method 100 or 300) for target tracking of the present disclosure.

According to an aspect of the present disclosure, there is provided a computer-readable non-transitory storage medium storing a program. The program, when executed by a computer, causes the computer to perform operations of: determining a plurality of local target trajectories having local target identifications based on a plurality of current frames at a current timing provided by a plurality of cameras; updating a first feature bank including a sub-tracklet feature of a recent sub-tracklet of each local target trajectory and a second feature bank including a sub-tracklet feature of an early sub-tracklet of each local target trajectory based on the plurality of local target trajectories; and performing, in a case where the current timing satisfies a time requirement for a predetermined clustering period, operations of: determining a plurality of current anchors having corresponding current cluster appearance features by clustering features in the union of the updated first feature bank and the updated second feature bank; and determining a global target identification of a detected target in the plurality of current frames based on the plurality of current anchors. For more details of the program, reference may be made to the description of the method (e.g., the method 100 or 300) for target tracking of the present disclosure.

According to an aspect of the present disclosure, there is further provided an information processing apparatus.

Figure 5 is an exemplary block diagram of an information processing apparatus 500 according to an embodiment of the present disclosure. In Figure 5, a Central Processing Unit (CPU) 501 executes various processing according to programs stored in a Read-Only Memory (ROM) 502 or programs loaded from a storage device 508 to a Random Access Memory (RAM) 503. In the RAM 503, data needed when the CPU 501 executes various processing and the like is also stored as needed.

The CPU 501, the ROM 502 and the RAM 503 are connected to each other via a bus 504. An input/output interface 505 is also connected to the bus 504.

The following components are connected to the input/output interface 505: an input device 506, including a soft keyboard and the like; an output device 507, including a display such as a Liquid Crystal Display (LCD) and the like, as well as a speaker and the like; the storage device 508 such as a hard disc and the like; and a communication device 509, including a network interface card such as an LAN card, a modem and the like. The communication device 509 executes communication processing via a network such as the Internet, a local area network, a mobile network or a combination thereof.

A driver 510 is also connected to the input/output interface 505 as needed. A removable medium 511 such as a semiconductor memory and the like is installed on the driver 510 as needed, such that programs read therefrom are installed in the storage device 508 as needed.

The CPU 501 can run a program corresponding to a method for target tracking.

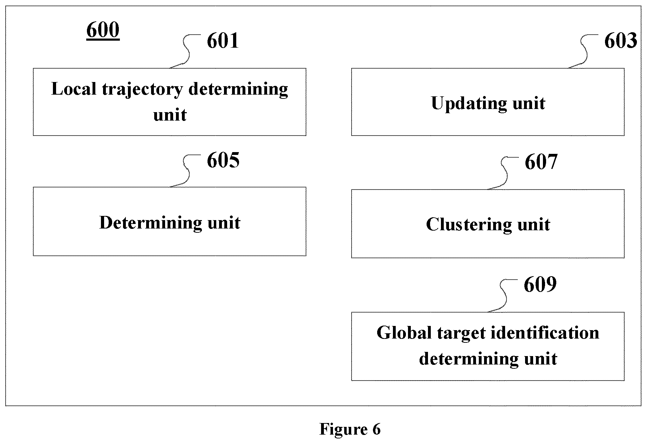

According to an aspect of the present disclosure, there is further provided a device for target tracking. Exemplary description is made below with reference to Figure 6. Figure 6 illustrates an exemplary block diagram of a device 600 for target tracking according to an embodiment of the present disclosure. The device 600 comprises: a local trajectory determining unit 601, an updating unit 603, a determining unit 605, a clustering unit 607, and a global target identification determining unit 609. The local trajectory determining unit 601 is configured to: determine a plurality of local target trajectories having local target identifications based on a plurality of current frames at a current timing provided by a plurality of cameras. The updating unit 603 is configured to: update a first feature bank including a sub-tracklet feature of a recent sub-tracklet of each local target trajectory and a second feature bank including a sub-tracklet feature of an early sub-tracklet of each local target trajectory based on the plurality of local target trajectories. The determining unit 605 is configured to: determine whether the current timing satisfies a time requirement for a predetermined clustering period. The clustering unit 607 is configured to: in response to a determination result by the determining unit 605 being "Yes", determine a plurality of current anchors having corresponding current cluster appearance features by clustering features in the union of the updated first feature bank and the updated second feature bank. The global target identification determining unit 609 is configured to: determine a global target identification of a detected target in the plurality of current frames based on a global anchor set, wherein the global anchor set is configured to update the global anchor set, by assigning respective global target identifications to the plurality of current anchors based on corresponding relationships between the plurality of current anchors and a plurality of previous anchors, after determining the plurality of current anchors by clustering. For a further configuration of the device 600, reference may be made to the description of the method (e.g., 100 or 300) for target tracking of the present disclosure.

**Table 3 IDF1 of Different Target Tracking Methods on Different Video Datasets**

| IDF1 | | **AIC-S005** | | **AIC-S008** | | **AIC-S013** | **FRJ Video** | |
|---|---|---|---|---|---|---|---|---|
| Offline Method (Literature 1) | | 94.1 | | 93.8 | | 98.7 | | 85.5 |
| Online Method (Method 100) | | 94.1 | | 93.8 | | 98.6 | | 85.5 |

**Table 4 IDF1 of Different Target Tracking Methods on Different Video Datasets**

| IDF1 | FRDCCrowd20 | FRDCCrowd40 | FRDCCrowd60 |
|---|---|---|---|
| Original Tracking Method (Bytetrack) | 78.6 | 69.4 | 65.0 |
| Offline Method (Literature 1) | 86.5 | 85.6 | 80.8 |
| Online Method (Method 100) | 84.2 | 81.8 | 75.1 |

To verify the effects of the method for target tracking of the present disclosure, as shown in Tables 3 and 4, the inventor has tested the performance of the target tracking method of the present disclosure using public beta datasets AICityChallenge (AIC) and FRJ video datasets, as well as self-made video datasets FRDCCrowd (including FRDCCrowd20, FRDCCrowd40 and FRDCCrowd60), and has compared the same with the performance of conventional technology. The testing results as shown in Table 3 indicate that: compared with the offline method, the online method of the present disclosure can run in a real-time manner (300FPS) while maintaining accuracy. The testing results as shown in Table 4 indicate that: relative to the original tracking method, the online method of the present disclosure has been somewhat improved in accuracy; in use of the FRDCCrowd datasets, relative to the offline method, the online method of the present disclosure, in terms of the IDF1 indicator, has a slight decrease in performance, which is however still within an allowable range, because it does not use an entire segment of a video in tracking.

The beneficial effects of the methods, devices and storage media of the present disclosure include at least one of: implementing real-time online target tracking, and achieving better target tracking accuracy.

As described above, according to the present disclosure, the principle of online tracking has been disclosed. It should be noted that, the effects of the solutions of the present disclosure are not necessarily limited to the above-mentioned effects, and in addition to or instead of the effects described in the preceding paragraphs, any of the effects as shown in the specification or other effects that can be understood from the specification can be obtained.

Although the present invention has been disclosed above through the description with regard to specific embodiments of the present invention, it should be understood that those skilled in the art can design various modifications (including, where feasible, combinations or substitutions of features between various embodiments), improvements, or equivalents to the present invention within the scope of the appended claims. These modifications, improvements or equivalents should also be considered to be included within the protection scope of the present invention.

It should be emphasized that, the term "comprise/include" as used herein refers to the presence of features, elements, steps or assemblies, but does not exclude the presence or addition of one or more other features, elements, steps or assemblies.

In addition, the methods of the various embodiments of the present invention are not limited to be executed in the time order as described in the specification or as shown in the accompanying drawings, and may also be executed in other time orders, in parallel or independently. Therefore, the execution order of the methods as described in the specification fails to constitute a limitation to the technical scope of the present invention.

### Appendix

The present disclosure includes but is not limited to the following solutions.
1. A method for target tracking, characterized by comprising:
   determining a plurality of local target trajectories having local target identifications based on a plurality of current frames at a current timing provided by a plurality of cameras;
   updating a first feature bank including a sub-tracklet feature of a recent sub-tracklet of each local target trajectory and a second feature bank including a sub-tracklet feature of an early sub-tracklet of each local target trajectory based on the plurality of local target trajectories; and
   performing, in a case where the current timing satisfies a time requirement for a predetermined clustering period, operations of:
      determining a plurality of current anchors having corresponding current cluster appearance features by clustering features in the union of the updated first feature bank and the updated second feature bank; and
      determining a global target identification of a detected target in the plurality of current frames based on the plurality of current anchors.
2. The method according to Appendix 1, wherein a start trajectory point of the recent sub-tracklet is a trajectory point with occurrence of a mutation in its appearance feature relative to the early sub-tracklet.
3. The method according to Appendix 1, wherein the time requirement is a time interval between the current timing and a timing of clustering the features in the union of the first feature bank and the second feature bank last time to determine a plurality of previous anchors having corresponding previous cluster appearance features is greater than or equal to the predetermined clustering period.
4. The method according to Appendix 3, wherein determining a global target identification of a detected target in the plurality of current frames based on the plurality of current anchors comprises:
   configuring the plurality of current anchors as a global anchor set, by assigning corresponding global target identifications to the plurality of current anchors based on corresponding relationships between the plurality of current anchors and the plurality of previous anchors; and
   determining the global target identification of the detected target in the plurality of current frames based on the global anchor set.
5. The method according to Appendix 1, wherein for each local target trajectory among the plurality of local target trajectories,
   the sub-tracklet feature of the recent sub-tracklet is an average feature of appearance features of the local target trajectory from a recent mutation trajectory point to a preceding trajectory point of a current trajectory point;
   the sub-tracklet feature of the early sub-tracklet is an average feature of appearance features of the local target trajectory from an early mutation trajectory point to a preceding trajectory point of the recent mutation trajectory point; and
   a difference between an appearance feature of the recent mutation trajectory point and the sub-tracklet feature of the early sub-tracklet is greater than a predetermined degree.
6. The method according to Appendix 1, wherein updating the first feature bank and the second feature bank comprises: for a local target trajectory among the plurality of local target trajectories,
   if a difference between an appearance feature of its current trajectory point and a sub-tracklet feature of a recent sub-tracklet of the local target trajectory is greater than a predetermined degree:
      moving the sub-tracklet feature of the recent sub-tracklet from the first feature bank to the second feature bank, and adding the appearance feature of the current trajectory point to the first feature bank;
   if a difference between an appearance feature of its current trajectory point and a sub-tracklet feature of a recent sub-tracklet of the local target trajectory is not greater than the predetermined degree:
      updating the recent sub-tracklet of the local target trajectory to a tracklet having been added the current trajectory point, and updating the sub-tracklet feature of the recent sub-tracklet of the local target trajectory in the first feature bank to a tracklet feature of the updated recent sub-tracklet.
7. The method according to Appendix 1, wherein in a case where the number of the sub-tracklet features in the second feature bank is greater than a feature number threshold, merging is performed on a pair of features with a feature similarity greater than or equal to a feature similarity threshold in the second feature bank after the features in the union of the first feature bank and the second feature bank are clustered.
8. The method according to Appendix 4, wherein the corresponding relationships between the plurality of current anchors and the plurality of previous anchors are determined using Hungarian algorithm.
9. The method according to Appendix 4, wherein the corresponding relationships between the plurality of current anchors and the plurality of previous anchors are determined based on cosine distances between pairs of cluster appearance features of the plurality of current anchors and the plurality of previous anchors.
10. The method according to Appendix 4, wherein the corresponding relationships between the plurality of current anchors and the plurality of previous anchors are determined based on degrees of overlap between sets of a plurality of features from the updated second feature bank which correspond to the plurality of current anchors and sets of a plurality of features from the second bank before updating which correspond to the plurality of previous anchors.
11. The method according to Appendix 4, wherein for a first anchor among the plurality of current anchors and a second anchor among the plurality of previous anchors, if following two conditions are satisfied, it is determined that the first anchor corresponds to the second anchor:
   First condition, a cosine distance between a pair of cluster appearance features of the first anchor and the second anchor is less than or equal to a cosine distance threshold; and
   Second condition, a degree of overlap between a set of a plurality of features from the updated second feature bank which corresponds to the first anchor and a set of a plurality of features from the second feature bank before updating which corresponds to the second anchor is greater than or equal to a degree threshold of overlap.
12. The method according to Appendix 1, wherein the method comprises a preparing stage, a length of a time period corresponding to the preparing stage is greater than twice the predetermined clustering period, and during the preparing stage, the operation of updating the first feature bank and the second feature bank is performed, while the operation of clustering the features in the union of the updated first feature bank and the updated second feature bank is not performed.
13. The method according to Appendix 1, wherein as the number of the features in the union of the first feature bank and the second feature bank increases, a clustering threshold used for clustering is gradually increased from a base threshold to a predetermined upper limit threshold greater than the base threshold.
14. A device for target tracking, characterized by comprising:
   a memory having instructions stored thereon; and
   at least one processor coupled to the memory and configured to execute the instructions to implement the method according to any one of Appendices 1 to 13.
15. A computer-readable non-transitory storage medium storing a program, characterized in that the program, when executed by a computer, causes the computer to:
   determine a plurality of local target trajectories having local target identifications based on a plurality of current frames at a current timing provided by a plurality of cameras;
   update a first feature bank including a sub-tracklet feature of a recent sub-tracklet of each local target trajectory and a second feature bank including a sub-tracklet feature of an early sub-tracklet of each local target trajectory based on the plurality of local target trajectories; and
   perform, in a case where the current timing satisfies a time requirement for a predetermined clustering period, operations of:
      determining a plurality of current anchors having corresponding current cluster appearance features by clustering features in the union of the updated first feature bank and the updated second feature bank; and
      determining a global target identification of a detected target in the plurality of current frames based on the plurality of current anchors.
16. The storage medium according to Appendix 15, wherein a start trajectory point of the recent sub-tracklet is a trajectory point with occurrence of a mutation in its appearance feature relative to the early sub-tracklet.
17. The storage medium according to Appendix 15, wherein the time requirement is a time interval between the current timing and a timing of clustering the features in the union of the first feature bank and the second feature bank last time to determine a plurality of previous anchors having corresponding previous cluster appearance features is greater than or equal to the predetermined clustering period.
18. The storage medium according to Appendix 17, wherein determining a global target identification of a detected target in the plurality of current frames based on the plurality of current anchors comprises:
   configuring the plurality of current anchors as a global anchor set, by assigning corresponding global target identifications to the plurality of current anchors based on corresponding relationships between the plurality of current anchors and the plurality of previous anchors; and
   determining the global target identification of the detected target in the plurality of current frames based on the global anchor set.
19. The storage medium according to Appendix 15, wherein for each local target trajectory among the plurality of local target trajectories,
   the sub-tracklet feature of the recent sub-tracklet is an average feature of appearance features of the local target trajectory from a recent mutation trajectory point to a preceding trajectory point of a current trajectory point;
   the sub-tracklet feature of the early sub-tracklet is an average feature of appearance features of the local target trajectory from an early mutation trajectory point to a preceding trajectory point of the recent mutation trajectory point; and
   a difference between an appearance feature of the recent mutation trajectory point and the sub-tracklet feature of the early sub-tracklet is greater than a predetermined degree.
20. The storage medium according to Appendix 15, wherein in a case where the number of the sub-tracklet features in the second feature bank is greater than a feature number threshold, merging is performed on a pair of features with a feature similarity greater than or equal to a feature similarity threshold in the second feature bank after the features in the union of the first feature bank and the second feature bank are clustered.

## Claims

1. A computer implemented method (100, 300) for target tracking, **characterized by** comprising:
determining (Op101) a plurality of local target trajectories having local target identifications based on a plurality of current frames at a current timing provided by a plurality of cameras;
updating (Op103) a first feature bank including a sub-tracklet feature of a recent sub-tracklet of each local target trajectory and a second feature bank including a sub-tracklet feature of an early sub-tracklet of each local target trajectory based on the plurality of local target trajectories; and
performing, in a case where the current timing satisfies a time requirement for a predetermined clustering period, operations of:
determining (Op107) a plurality of current anchors having corresponding current cluster appearance features by clustering features in the union of the updated first feature bank and the updated second feature bank; and
determining (Op109) a global target identification of a detected target in the plurality of current frames based on the plurality of current anchors.

2. The method according to claim 1, wherein a start trajectory point of the recent sub-tracklet is a trajectory point with occurrence of a mutation in its appearance feature relative to the early sub-tracklet.

3. The method according to claim 1, wherein the time requirement is a time interval between the current timing and a timing of clustering the features in the union of the first feature bank and the second feature bank last time to determine a plurality of previous anchors having corresponding previous cluster appearance features is greater than or equal to the predetermined clustering period.

4. The method according to claim 3, wherein determining a global target identification of a detected target in the plurality of current frames based on the plurality of current anchors comprises:
configuring the plurality of current anchors as a global anchor set, by assigning corresponding global target identifications to the plurality of current anchors based on corresponding relationships between the plurality of current anchors and the plurality of previous anchors; and
determining the global target identification of the detected target in the plurality of current frames based on the global anchor set.

5. The method according to claim 1, wherein for each local target trajectory among the plurality of local target trajectories,
the sub-tracklet feature of the recent sub-tracklet is an average feature of appearance features of the local target trajectory from a recent mutation trajectory point to a preceding trajectory point of a current trajectory point;
the sub-tracklet feature of the early sub-tracklet is an average feature of appearance features of the local target trajectory from an early mutation trajectory point to a preceding trajectory point of the recent mutation trajectory point; and
a difference between an appearance feature of the recent mutation trajectory point and the sub-tracklet feature of the early sub-tracklet is greater than a predetermined degree.

6. The method according to claim 1, wherein updating the first feature bank and the second feature bank comprises: for a local target trajectory among the plurality of local target trajectories,
if a difference between an appearance feature of its current trajectory point and a sub-tracklet feature of a recent sub-tracklet of the local target trajectory is greater than a predetermined degree:
moving the sub-tracklet feature of the recent sub-tracklet from the first feature bank to the second feature bank, and adding the appearance feature of the current trajectory point to the first feature bank;
if a difference between an appearance feature of its current trajectory point and a sub-tracklet feature of a recent sub-tracklet of the local target trajectory is not greater than a predetermined degree:
updating the recent sub-tracklet of the local target trajectory to a tracklet having been added the current trajectory point, and updating the sub-tracklet feature of the recent sub-tracklet of the local target trajectory in the first feature bank to a tracklet feature of the updated recent sub-tracklet.

7. The method according to claim 1, wherein in a case where the number of the sub-tracklet features in the second feature bank is greater than a feature number threshold, merging is performed on a pair of features with a feature similarity greater than or equal to a feature similarity threshold in the second feature bank after the features in the union of the first feature bank and the second feature bank are clustered.

8. The method according to claim 4, wherein the corresponding relationships between the plurality of current anchors and the plurality of previous anchors are determined using Hungarian algorithm.

9. The method according to claim 4, wherein the corresponding relationships between the plurality of current anchors and the plurality of previous anchors are determined based on cosine distances between pairs of cluster appearance features of the plurality of current anchors and the plurality of previous anchors.

10. The method according to claim 4, wherein the corresponding relationships between the plurality of current anchors and the plurality of previous anchors are determined based on degrees of overlap between sets of a plurality of features from the updated second feature bank which correspond to the plurality of current anchors and sets of a plurality of features from the second bank before updating which correspond to the plurality of previous anchors.

11. The method according to claim 4, wherein for a first anchor among the plurality of current anchors and a second anchor among the plurality of previous anchors, if following two conditions are satisfied, it is determined that the first anchor corresponds to the second anchor:
First condition, a cosine distance between a pair of cluster appearance features of the first anchor and the second anchor is less than or equal to a cosine distance threshold; and
Second condition, a degree of overlap between a set of a plurality of features from the updated second feature bank which corresponds to the first anchor and a set of a plurality of features from the second feature bank before updating which corresponds to the second anchor is greater than or equal to a degree threshold of overlap.

12. The method according to claim 1, wherein the method comprises a preparing stage, a length of a time period corresponding to the preparing stage is greater than twice the predetermined clustering period, and during the preparing stage, the operation of updating the first feature bank and the second feature bank is performed, while the operation of clustering the features in the union of the updated first feature bank and the updated second feature bank is not performed.

13. The method according to claim 1, wherein as the number of the features in the union of the first feature bank and the second feature bank increases, a clustering threshold used for clustering is gradually increased from a base threshold to a predetermined upper limit threshold greater than the base threshold.

14. A device (400) for target tracking, comprising:
a memory (401) having instructions stored thereon; and
at least one processor (403) coupled to the memory and configured to execute the instructions to implement the method according to any one of claims 1 to 13.

15. A computer-readable non-transitory storage medium storing a program, **characterized in that** the program, when executed by a computer, causes the computer to:
determine (Op101) a plurality of local target trajectories having local target identifications based on a plurality of current frames at a current timing provided by a plurality of cameras;
update (Op103) a first feature bank including a sub-tracklet feature of a recent sub-tracklet of each local target trajectory and a second feature bank including a sub-tracklet feature of an early sub-tracklet of each local target trajectory based on the plurality of local target trajectories; and
perform, in a case where the current timing satisfies a time requirement for a predetermined clustering period, operations of:
determining (Op107) a plurality of current anchors having corresponding current cluster appearance features by clustering features in the union of the updated first feature bank and the updated second feature bank; and
determining (Op109) a global target identification of a detected target in the plurality of current frames based on the plurality of current anchors.
